# EUROPEAN PATENT APPLICATION

(11) **EP 4 687 106 A1**
(43) Date of publication of application: **04.02.2026**
(21) Application number: 25192842.0
(22) Date of filing: 30.07.2025
(51) Int. Cl.: G06T 13/60, G06T 19/20

(54) **IMAGE PROCESSING METHOD AND SYSTEM**

(30) Priority: 30.07.2024 GB 202411144
(71) Applicant: Sony Interactive Entertainment Inc., Tokyo 108-0075 (JP)
(72) Inventor: VILLANUEVA-BARREIRO, Marina, London, W1F 7LP (GB); SWANN, Andrew, London, W1F 7LP (GB); CRACIUN, Cristian, London, W1F 7LP (GB); NEDELCU, Radu-Andrei, London, W1F 7LP (GB); SUNDARAM, Chockalingam Ravi, London, W1F 7LP (GB); MOTILLA, Daniel Montero, London, W1F 7LP (GB); PANESAR, Pritpal Singh, London, W1F 7LP (GB)
(74) Representative: Fish & Richardson P.C.

(57) **Abstract**

There is provided an image processing method for generating images including a volumetric effect. The method comprises: sampling, using a three-dimensional grid, computer-generated volumetric effect data for a virtual scene at a first sampling resolution, to obtain a first set of sampling results; upscaling at least part of the first set of sampling results by interpolating between samples of the at least part of the first set of sampling results, to obtain a second set of sampling results having a second, higher, sampling resolution; and generating one or more display images for the virtual scene at least partly in dependence on the second set of sampling results

## Description

### BACKGROUND OF THE INVENTION

### Field of the invention

The present invention relates to an image processing method and system.

### Description of the Prior Art

Video graphics applications, such as in video games, TV shows, and movies, sometimes use volumetric effects to model smoke, fog, or other fluid or particle interactions such as the flow of water or sand, or an avalanche or rockslide, or fire.

Typically such volumetric effects are part of a complex rendering pipeline, being potentially responsive to the topology of the rendered environment, the textures / colours of that environment, and the lighting of that environment, as well as the properties of the volumetric material itself. These factors are then combined within the calculation for the volume of the effect, and this can result in a significant computational cost to the system. In practice this computational cost can result in either slow production of a TV show or film, or in adversely reducing the frame rate in a live generation of a video game.

One solution to this problem is to model the volumetric effect at a much lower resolution than the rendered image, to reduce the computational overhead, and then blend the results generated for a number of frames (e.g. ten) to smooth out the results - which would otherwise be blocky and discontinuous between calculations and hence appear to flicker. However, this sacrifices temporal resolution in order to recover an illusion of spatial resolution.

More generally, rendering of volumetric effects can potentially require burdensome processing. For interactive applications, such as video game applications and other similar applications, the associated time and processing constraints can present difficulties in rendering volumetric effects with acceptable quality.

The present invention seeks to mitigate or alleviate these problems.

### SUMMARY OF THE INVENTION

Various aspects and features of the present invention are defined in the appended claims and within the text of the accompanying description and include at least:
- In a first aspect, an image processing method is provided in accordance with claim 1.
- In another aspect, an image processing system is provided in accordance with claim 15.

### BRIEF DESCRIPTION OF THE DRAWINGS

A more complete appreciation of the disclosure and many of the attendant advantages thereof will be readily obtained as the same becomes better understood by reference to the following detailed description when considered in connection with the accompanying drawings, wherein:
- Figure 1 is a schematic diagram illustrating an example of an entertainment device;
- Figure 2a is a schematic diagram illustrating an example of a method for rendering images;
- Figure 2b is a schematic diagram illustrating an example of a method for rendering a volumetric effect;
- Figure 3 is a schematic diagram illustrating an image processing apparatus in accordance with embodiments of the disclosure;
- Figure 4 is a schematic diagram illustrating an image processing method in accordance with embodiments of the disclosure; and
- Figure 5 is a schematic diagram illustrating an example of a view frustum voxel grid.

### DESCRIPTION OF THE EMBODIMENTS

An image processing method and system are disclosed. In the following description, a number of specific details are presented in order to provide a thorough understanding of the embodiments of the present invention. It will be apparent, however, to a person skilled in the art that these specific details need not be employed to practice the present invention. Conversely, specific details known to the person skilled in the art are omitted for the purposes of clarity where appropriate.

In an example embodiment of the present invention, a suitable system and/or platform for implementing the methods and techniques herein may be an entertainment device.

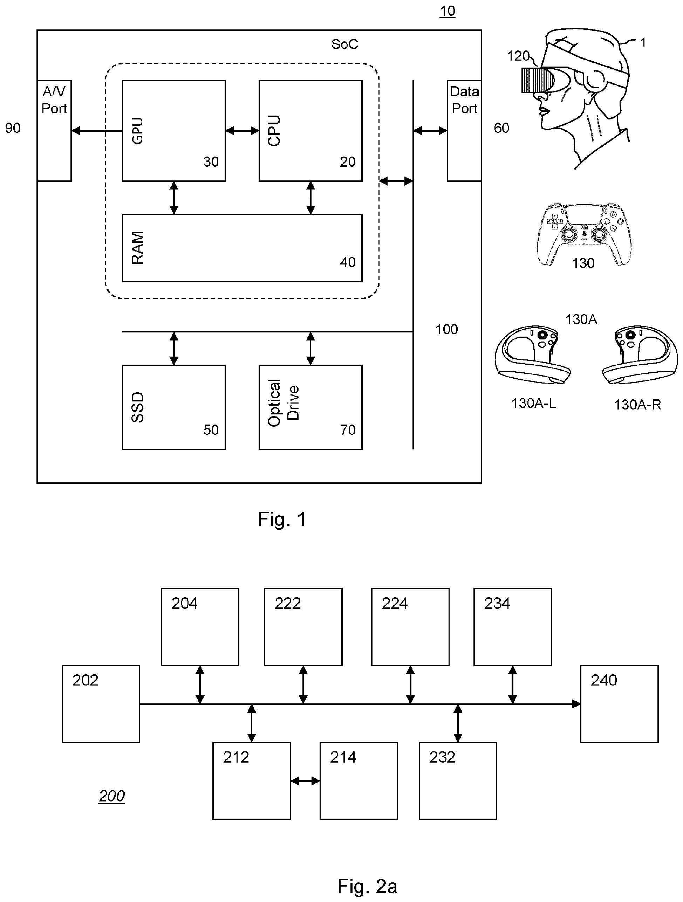

Referring now to the drawings, wherein like reference numerals designate identical or corresponding parts, Figure 1 shows an example of an entertainment device 10 which may be a computer or video game console, for example.

The entertainment device 10 comprises a central processor 20. The central processor 20 may be a single or multi core processor. The entertainment device also comprises a graphical processing unit or GPU 30. The GPU can be physically separate to the CPU, or integrated with the CPU as a system on a chip (SoC).

The GPU, optionally in conjunction with the CPU, may process data and generate video images (image data) and optionally audio for output via an AV output. Optionally, the audio may be generated in conjunction with or instead by an audio processor (not shown).

The video and optionally the audio may be presented to a television or other similar device. Where supported by the television, the video may be stereoscopic. The audio may be presented to a home cinema system in one of a number of formats such as stereo, 5.1 surround sound or 7.1 surround sound. Video and audio may likewise be presented to a head mounted display unit 120 worn by a user 1.

The entertainment device also comprises RAM 40, and may have separate RAM for each of the CPU and GPU, and/or may have shared RAM. The or each RAM can be physically separate, or integrated as part of an SoC. Further storage is provided by a disk 50, either as an external or internal hard drive, or as an external solid state drive, or an internal solid state drive.

The entertainment device may transmit or receive data via one or more data ports 60, such as a USB port, Ethernet^{®} port, Wi-Fi^{®} port, Bluetooth^{®} port or similar, as appropriate. It may also optionally receive data via an optical drive 70.

Audio/visual outputs from the entertainment device are typically provided through one or more A/V ports 90, or through one or more of the wired or wireless data ports 60.

An example of a device for displaying images output by the entertainment device is the head mounted display 'HMD' 120 worn by the user 1. The images output by the entertainment device may be displayed using various other devices - e.g. using a conventional television display connected to A/V ports 90.

Where components are not integrated, they may be connected as appropriate either by a dedicated data link or via a bus 100.

Interaction with the device is typically provided using one or more handheld controllers 130, 130A and/or one or more VR controllers 130A-L,R in the case of the HMD. The user typically interacts with the system, and any content displayed by, or virtual environment rendered by the system, by providing inputs via the handheld controllers 130, 130A. For example, when playing a game, the user may navigate around the game virtual environment by providing inputs using the handheld controllers 130, 130A.

Figure 1 therefore provides an example of a data processing apparatus suitable for executing an application such as a video game and generating images for the video game for display. Images may be output via a display device such as a television or other similar monitor and/or an HMD (e.g. HMD 120). More generally, user inputs can be received by the data processing apparatus and an instance of a video game can be executed accordingly with images being rendered for display to the user.

Rendering operations are typically performed by rendering circuitry (e.g. GPU and/or CPU) as part of an execution of an application such as computer games or other similar applications to render image frames for display. Rendering operations typically comprise processing of model data or other predefined graphical data to render data for display as an image frame.

A rendering process performed for a given image frame may comprise a number of rendering passes for obtaining different rendering effects for the rendered image frame. Examples of rendering passes for rendering a scene may include rendering a shadow map, rendering opaque geometries, rendering transparent geometries, rendering deferred lighting, rendering depth-of-field effects, anti-aliasing, rendering ambient occlusions, and scaling among others.

Figure 2a schematically illustrates an example method of rendering images for display using a rendering pipeline 200. An entertainment device such as that discussed with respect to Figure 1 may for example implement such a rendering pipeline. The rendering pipeline 200 takes data 202 regarding what is visible in a scene and if necessary performs a so-called z-cull 204 to remove unnecessary elements. Initial texture/material and light map data are assembled 212, and static shadows 214 are computed as needed. Dynamic shadows 222 are then computed. Reflections 224 are then also computed.

At this point, there is a basic representation of the scene, and additional elements 232 can be included such as translucency effects, and/or volumetric effects such as those discussed herein. Then any postprocessing 234 such as tone mapping, depth of field, or camera effects can be applied, to produce the final rendered frame 240.

For generating volumetric effects, rendering pipeline techniques may use a volumetric simulation stage followed by a stage of sampling that samples the volumetric simulation. Rendering of volumetric effects, such as fog, smoke, steam, fire and so on typically require volumetric rendering approaches. The use of volumetric rendering for a scene may be desired for various reasons. However, rendering of scenes with realistic volumetric effects can be computationally expensive.

For convenience, the description herein may refer to 'fog' as a shorthand example of a volumetric effect, but it will be appreciated that the disclosure and techniques herein are not limited to fog, and may comprise for example other volumetric physical simulations, such as those of smoke, water, sand and other particulates such as in an avalanche or landslide, and fire.

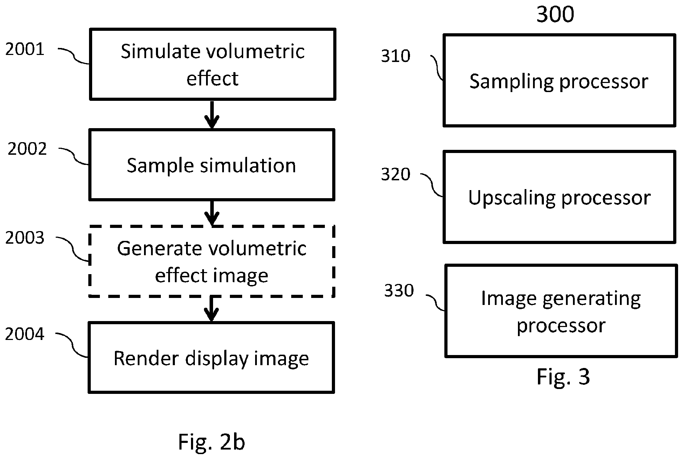

Figure 2b schematically illustrates an example method for rendering images with a volumetric effect, such as a volumetric fog effect. The method comprises: performing (at step 2001) a volumetric simulation (e.g. volumetric fog simulation); performing sampling calculations (at a step 2002) to sample the volumetric simulation and obtain a set of sampling results (e.g. stored as a 3D texture); generating (at a step 2003) a 2D volumetric effect image (also referred to herein as a 'volumetric effect map' or 'fog map') based on the sampling results, e.g. by projecting the sampling results onto a 2D image plane for a virtual camera viewpoint; and rendering (at a step 2004) display images to include a volumetric effect based on the 2D volumetric effect image. The step 2004 may comprise various render passes for providing various rendering effects, in which a volumetric effect rendering pass (e.g. volumetric fog rendering pass) can be used. In some cases, the step 2003 may be omitted and the step 2004 may comprise rendering display images directly based on the sampling results obtained at step 2002.

The volumetric simulation may use any suitable algorithm. For example, fog particles may be simulated or instead a density of fog may be simulated. Interaction of light with the fog can be modelled (e.g. transmission, absorption and scattering of light). The volumetric simulation may be performed only for a portion of a scene that is visible (e.g. a portion of a game world currently within a field of view of a virtual camera). The sampling calculation then samples the volumetric dataset with the results being stored, for example as a 3D texture. The sampling results are then optionally transformed (e.g. via a projection) into a 2D volumetric effect image; this provides an intermediate masked representation of the fog in the scene (i.e. where the fog is present in the scene and at what intensity). Rendering operations can thus be performed to render one or more display images, in which the rendering operations use the results of the sampling and the display images depict the scene with a volumetric effect (e.g. volumetric fog effect).

The sampling at step 2002 may comprise sampling the volumetric simulation using a low resolution froxel grid (i.e. sampling the volumetric simulation at a low sampling resolution).

As used herein, the term "froxel" connotes a view frustrum voxel (i.e. frustrum-voxel). A froxel grid may comprise frustrum voxels aligned with a virtual camera viewpoint. For instance, a froxel grid may comprise a three dimensional grid of voxels that is warped to map into a virtual camera frustum (i.e. a 3D grid of froxels). Hence the warp acts to convert a rectangular box of voxels into a truncated pyramid of similarly warped voxels fitting within the virtual camera frustum (i.e. froxels). It will be appreciated that in practice there is no warping step per se; simply that is the shape assumed for the froxel grid for the purposes of rendering calculations.

A low resolution froxel grid uses relatively large voxels, whereas a high resolution grid uses relative small froxels. 'Large' and 'small' in this case can depend on the computational budget available to the process of rendering the volumetric effect. However, typically the grid can be assumed to be 2, 4, 8, 16, 32, 64, or more times lower in resolution than the final rendered image, taking account of the effective size of the grid as a function of distance in the frustum. For example, a froxel grid may have dimensions 64x64x128 (i.e. 2D slices each 64x64 with 128 slices along the depth axis), or 80x45x64 or 160x90x128 for a more typical 16:9 aspect ratio image. The shape of the frustum means that there is a better spatial resolution within the virtual world closer to the virtual camera position.

An issue with existing approaches is that the rendered volumetric effect (e.g. fog) is of low quality, with poor temporal coherence. For example, sampling a potentially high resolution simulated fog dataset (or calculating values for a specific point to represent a large froxel) can give rise to a blocky simulation and flickering from one frame to the next as the values change.

As noted previously herein, one solution is to blend low resolution samples with previous low resolution samples (e.g. blending in 90% of the samples from the previous low resolution sample set). This smooths the results but at the cost of temporal resolution, making the flow of the fog smeary and less clear.

Embodiments of the present disclosure relate to an image processing method that aims to at least partially alleviate these problems. This includes sampling computer-generated (e.g. via a simulation) volumetric effect data for a virtual scene using a three-dimensional (3D) grid (e.g. a froxel grid) at a first sampling resolution. At least part of the so obtained first set of sampling results is then upscaled by interpolating between samples, e.g. using bicubic interpolation, to generate a second, higher sampling resolution, set of sampling results, which may e.g. have a higher resolution in at least one of the width, height and depth directions. By generating display images using the upscaled second set of sampling results, the present disclosure allows generating display images with higher quality volumetric (e.g. fog effects). The techniques of the present disclosure can allow for integration with existing graphics processing pipelines to allow computationally efficient generation of output images with volumetric effects (e.g. fog effects).

By increasing the sampling resolution using upscaling, the present approach allows reducing intra-frame blockiness and also reducing flickering between frames as the values within the higher resolution representation of the 3D (e.g. froxel) grid are more locally representative of the volumetric simulation from frame to frame. This reduces or removes the need for averaging across frames.

In this way, the spatial and temporal resolution and fidelity of the fog can be improved, with comparatively little computational overhead as the upscaling process is more efficient than computing the simulation values directly at the higher resolution. In examples of the present disclosure, the upscaling is performed using bicubic interpolation. It was found that bicubic interpolation in 3D space to upscale volumetric effect samples provides a significant improvement in fog effect quality at relatively low computational cost, thus providing an improved balance between display image quality and efficiency.

Accordingly, the present disclosure allows generating one or more display images to more efficiently include a higher quality (higher resolution and improved temporal coherence) fog effect.

As used herein, the term "sampling resolution" relates to the number of samples, per virtual scene volume, taken when sampling the computer-generated (e.g. simulated) volumetric effect. When sampling using a 3D grid, the sampling resolution may therefore be defined as the number of samples in each of the width (W), heigh (H) and depth (D) directions, per unit of virtual scene volume. One set of samples having a higher sampling resolution than another set may therefore relate to the one set comprising more samples than the another set in a given volume of the virtual scene. For example, a higher resolution 3D froxel grid has a greater number of respective froxels for a same given 3D space such that froxels of a smaller size are used in the higher resolution sample set.

Figure 3 shows an example of an image processing apparatus 300 in accordance with one or more embodiments of the present disclosure.

The image processing apparatus 300 may be provided as part of a user device (such as the entertainment device of Figure 1) and/or as part of a server device. The image processing apparatus 300 may be implemented in a distributed manner using two or more respective processing devices that communicate via a wired and/or wireless communications link. The image processing apparatus 300 may be implemented as a special purpose hardware device or a general purpose hardware device operating under suitable software instruction. The image processing apparatus 300 may be implemented using any suitable combination of hardware and software.

The image processing apparatus 300 comprises a sampling processor 310, an upscaling processor 320, and an image generating processor 330. The operations discussed in relation to the sampling processor 310, upscaling processor 320 and image generating processor 330 may be implemented using the CPU 20 and/or GPU 30, for example.

The sampling processor 310 samples computer-generated volumetric effect data for a virtual scene using a 3D (e.g. froxel) grid at a first sampling resolution, to obtain a first set of sampling results. The upscaling processor 320 upscales at least part of the first set of sampling results by interpolating between samples of the first set of sampling results, to obtain a second set of sampling results having a second, higher, sampling resolution. The image generating processor 330 then generates one or more display images for the virtual scene at least partly in dependence on the second set of sampling results.

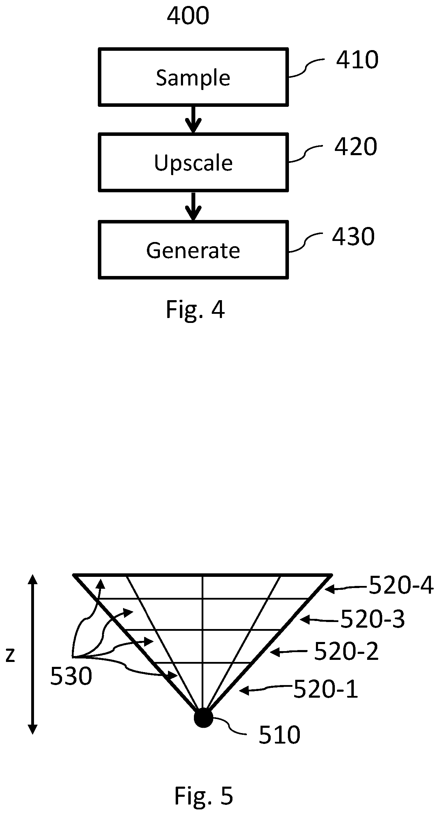

Figure 4 shows an example of an image processing method 400 in accordance with one or more embodiments of the present disclosure. The method 400 may be used to generate images with volumetric effect (e.g. fog) effects.

A step 410 comprises sampling computer-generated volumetric effect data for a virtual scene. The volumetric effect data is sampled using a 3D grid. The sampling performed at a first sampling resolution. A first set of sampling results is therefore output at step 410.

The computer-generated volumetric effect data sampled at step 410 may have been generated using any suitable simulation algorithm. In some cases, the method 400 may further comprise generating the volumetric effect data. Alternatively or in addition, pre-generated volumetric effect data may be stored. For example, volumetric effect data may be generated in advance by another data processing apparatus and downloaded to the image processing apparatus 300. In some examples, volumetric effect data may be generated by another data processing apparatus and streamed (e.g. live streamed) to the image processing apparatus 300 for sampling thereof.

The volumetric effect data may be generated using any suitable simulation algorithm. In some cases, the volumetric effect data may be generated by a rendering pipeline for a video game or game engine. The Unreal ^{®} game engine is an example of a suitable game engine that can be used for simulating such volumetric effect data. The volumetric effect data can be simulated both spatially and temporally so that the volumetric effect data varies over time and sampling with respect to the volumetric effect data can be performed to sample the volumetric effect data at different points in time (e.g. from frame to frame). For example, in the case of a simulation of volumetric fog effect data, a 3D simulation of respective particles and/or fog density for a portion of a virtual scene within a field of view of a virtual camera may be calculated at various times.

The volumetric effect data may relate to a volumetric effect such as one or more of: a volumetric fog effect, volumetric smoke effect, volumetric water effect, a volumetric fire effect, and/or a volumetric mobile particles effect (e.g. sand, or avalanches, etc.). The first set of samples obtained at step 410 may therefore represent one or more of fog, smoke, water, fire, and/or mobile particles.

As noted above, step 410 comprises sampling the volumetric effect data (e.g. volumetric fog effect data) to obtain a set of sampling results. The sampling is performed using a 3D grid. Sampling using the 3D grid may comprise performing a 3D sampling calculation for sampling the volumetric effect data. Generally, the 3D volumetric effect data is sampled using a 3D sampling scheme to obtain a set of 3D sampling results.

The volumetric effect data may be sampled according to a frame rate to periodically obtain a set of sample results for the volumetric effect data. For example, each sample of the 3D grid may be updated every frame. Alternatively, the samples may be updated less frequently, such as every two or more frames, to reduce computational costs.

The 3D grid used for the sampling may comprise a frustrum voxel grid (i.e. a froxel grid) comprising frustrum voxels (i.e. froxels).

Figure 5 schematically illustrates an example of a plan view of a froxel grid.

The 3D froxel grid comprises frustum voxels which fit within the view frustum of the virtual camera, as shown in Figure 5. In the example shown, the froxels 530 are aligned with a virtual camera viewpoint 510 for a virtual scene. The froxels 530 each define a cell of the froxel grid. The use of such a froxel grid can be beneficial in that frustum-shaped voxels contribute to achieving better spatial resolution for part of a virtual scene closer to the virtual camera position. Sampling using a froxel grid therefore allows improving the efficiency of the sampling process as fewer samples are taken with increasing distance from the virtual camera position.

The example in Figure 5 shows a view frustum voxel grid including four depth slices 520 in the depth (z) axis for purposes of explanation. In practice, the volumetric effect data may for example be sampled using a froxel grid having dimensions of 64x64x128 (i.e. 2D slices each of 64x64 with 128 slices along the depth axis (i.e. 128 depth slices)), or 80x45x64 or 160x90x128 for a more typical 16:9 aspect ratio image.

Alternatively to a froxel grid, the 3D grid used for sampling at step 410 may comprise a voxel grid with voxels of a uniform shape and volume. A voxel grid may for example be used when the volumetric effect data is sampled once for use in a plurality of display images each having a different virtual camera viewpoint. In such cases, using voxels with uniform shapes allows generating display images with high quality fog effects from a range of virtual camera viewpoints.

Hence, step 410 comprises sampling the volumetric effect data to obtain a 3D first set of sampling results having a first sampling resolution. The set of sampling results may be stored as a 3D array (e.g. WxHxD) for which each entry may be indicative of at least a grayscale value or colour value (e.g. in RGB format). Hence, in some examples a respective sample of the set of sampling results may specify a colour value. For example, for a simulation of a volumetric fog, the sampling may result in obtaining a set of sampling results indicative of colours that are generally white (e.g. grey, off-white and so on) for respective froxels (or voxels). In some embodiments of the disclosure, the sampling may obtain sampling results indicative of both colour and transparency (e.g. a respective sample result may be indicative of an RGBA value, where A is an alpha value between 1 and 0 for indicating transparency).

The first sampling resolution may be relatively low due to factors such as computation cost and/or processing time constraints. For example, whilst sampling using a 640x390x128 3D grid may be desirable, a data size of approximately 250 MB for the resulting samples and the computational overhead associated with such a sampling calculation can be prohibitive and therefore much lower sampling resolutions (e.g. 64x64x128) may typically be used. As a consequence of this, if the first set of sampling results were to be used directly for generating display images, the volumetric effect rendered in this way may be of low quality with poor temporal coherence.

A step 420 comprises upscaling at least part (e.g. some or all) of the first set of sampling results.

The upscaling is performed by interpolating between samples in the first set of sampling results to estimate values of new samples, thus increasing the total number of samples and the sampling resolution. In this way, a second set of sampling results is obtained, which second set has a second sampling resolution that is higher than the first sampling resolution. Upscaling via interpolation is more computationally efficient than sampling the fog at higher resolution and therefore provides a more efficient way to obtain high quality fog effects in display images.

The higher resolution second sample set thus has increased sampling resolution relative to the first sample set and can be used to provide a higher quality fog effect relative to that achieved using the initial first sample set. Rather than using a high resolution sampling for sampling the computer-generated volumetric effect data and generating a high resolution sample set (which is one possibility), the method 400 allows sampling using a lower resolution and using upscaling at step 420 to generate a higher resolution sample set so as to effectively allow recovery of information. For example, whereas the initial first sample set may have a sampling resolution of 64x64x128, the higher resolution second sample set may have a sampling resolution of 256x256x128 (e.g. 4x upsampling in the spatial dimensions of width and height, with the depth dimensions unchanged).

The upscaling at step 420 is performed in 3D (e.g. froxel) space, where a 3D first set of sampling results is upscaled to a 3D second set of sampling results. In this way, 3D information about the volumetric effect (e.g. fog) is retained in the upscaling process, e.g. ensuring that a new fog sample created by interpolation is interpolated from fog samples that actually neighbour it in 3D space. The present 3D approach therefore contrasts with existing image upscaling approaches in which upscaling is performed in 2D pixel space as a result of which new pixels can be 'hallucinated' (e.g. a new pixel may be added based on neighbouring pixels that relate to objects at entirely different depths). The present 3D upscaling approach therefore provides improved volumetric effect (e.g. fog) quality.

Upscaling the first sample set may comprise upsampling the first set and/or applying super resolution techniques to the first sample set.

In one or more examples, the interpolation may be performed using bicubic interpolation. It was found that bicubic interpolation in 3D space as in the present approach allows improving fog quality at relatively modest computational cost, providing an improved balance between display image quality and efficiency.

It will be appreciated that interpolation may be performed using any other suitable interpolation technique, in addition or alternatively to, bicubic interpolation. For example, interpolation amy be performed using one or more of: Bicubic interpolation, Nearest-Neighbour interpolation, Linear interpolation, Bilinear interpolation, Sinc interpolation, Tricubic interpolation, Trilinear interpolation, and/or Lanczos interpolation/resampling.

Interpolation may be performed for each RGB colour channel in the first sample set. Alternatively, only a subset of the colour channels may be upscaled.

The 3D interpolation may be performed by dividing the first set of sampling results into a plurality of 2D slices, and performing interpolation within each 2D slice. For example, the first sample set may be divided into a plurality of slices along a first direction (e.g. the depth, z, direction). Referring back to Figure 5, for example, the froxel grid may be divided into a plurality of depth slices 520-1, 520-2, 520-3, and 520-4. Interpolation may then be performed for the sampling results for each 2D depth slice 520 of the froxel grid to increase the resolution for each 2D depth slice. The resulting upscaled depth slices can then be combined back into a second set of sampling results that can in turn be used to generate display images as described below with reference to step 430.

Dividing the first sampling set into slices (i.e. 2D planes) allows using 2D interpolation techniques (such as bicubic interpolation) within each slice. This can therefore further improve the efficiency of the upscaling process. Performing upscaling for each depth slice can be particularly advantageous, as, while ensuring that interpolation is performed between samples that are adjacent in 3D space, it reduces computational costs by maintaining the same depth dimensions. It was found that upscaling in the depth direction improved perceived fog effect quality to a lesser extent than upscaling in the width and height directions; not upscaling in the depth direction may therefore be omitted to reduce computational costs.

Alternatively, upscaling may be performed in the depth direction, in addition to upscaling within each depth slice. For example, the sample resolution in the depth direction may be increased by performing linear interpolation in the depth (z) direction. Therefore, in one or more examples, the width and height sample resolution may be increased by performing bicubic interpolation for each depth slice, and the depth sample resolution may be increased using linear interpolation in the depth direction.

In some cases, the first sample set may be divided into slices in multiple directions with upscaling performed for each slice in each direction. For example, the first sample set may be divided into a plurality of first slices along a first direction (e.g. a depth direction) with upscaling (e.g. using bicubic interpolation) performed for each first slice, and the so-upscaled sample set may then be divided into a plurality of second slices along a second direction (e.g. a height or width direction) with further upscaling (e.g. again using bicubic interpolation) performed for each second slice. In this way, upscaling in all three dimensions may be achieved, thus further improving volumetric effect quality. The first and second directions may be perpendicular to one another, e.g. the first and second directions may correspond to the depth, width, and height directions. It will be appreciated that when a froxel grid is used for the sampling, slices in the width and height directions may not be parallel to one another (see e.g. lines in z-direction originating from the virtual camera viewpoint 510 in Figure 5 which may define height slices).

In some cases, alternatively or in addition to dividing first sample set into 2D slices, interpolation between samples may be performed directly in the 3D sample space. For example, interpolation in the 3D space may be performed using Trilinear interpolation, Tricubic interpolation, or 3D Lanczos resampling.

At least part of the first set of sampling results is upscaled at step 420. In some cases, the at least part of the first set may comprise all of the first sample set, such that the sample resolution is increased across samples in the first set.

Alternatively, only a subset (e.g. one or more portions/regions) of the first set may be upscaled at step 420. For example, upscaling may be performed to upscale a first portion of the first set of sample results whilst not performing upscaling for a second portion (or performing upscaling for the second portion with a lower upscaling factor - e.g. 2x upsampling (i.e. resolution increase) for one portion and 4x upsampling for another portion). Hence, whilst the first set of sample results may have a uniform sampling resolution, the upscaled second set of sample results may comprise at least a first sample portion with a first sampling resolution (e.g. X samples per unit volume) and a second sample portion with a second sampling resolution (e.g. Y samples per unit volume) where X and Y are different. For example, the first sample portion may have been upscaled by a factor of N relative to the corresponding sample portion in the first sample set (e.g. N may be a value of 2, 4 or 10 for example), and the second sample portion may not have been upscaled and may have a same sampling resolution as the corresponding sample portion in the first sample set.

The second set of sampling results may therefore comprise a first sample portion having a first sampling resolution and a second sample portion having a second sampling resolution different from the first sampling resolution. More generally, the second sample set output at step 420 may comprise a plurality of sample portions having a plurality of different sampling resolutions.

In some cases, different interpolation techniques may be used to upscale different portions of the first sample set. For example, bicubic interpolation may be used to upscale a first portion of the first sample set, and bilinear interpolation may be used to upscale a second portion of the first sample set. The different portions may be upscaled to the same target sampling resolution; however, by using different interpolation techniques different amounts of computational resources are applied to the upscaling of different regions thereby further improving efficiency. For example, more computationally intensive bicubic interpolation may be used for a more salient portion of the first sample set (where the saliency may be determined using the approaches for selecting samples for upscaling as discussed below) and less computationally intensive bilinear interpolation may be used for less salient portions of the first sample set. Alternatively, the different portions may be upscaled to different target sampling resolutions.

In some cases, one or more (e.g. a subset of) samples may be selected from the first set of sampling results for the at least part of the first set of sampling results for upscaling at step 420. In other words, step 420 may comprise selecting one or more portions of the first sample set and increasing sampling resolution for the one or more selected portions. It will be appreciated that selecting a given sample for upscaling connotes that one or more new samples are interpolated in the vicinity of the given selected sample. Likewise, it will be appreciated that samples that are not selected may not be upscaled, or may be upscaled to a lesser extent than selected samples (e.g. to a lower target sampling resolution, or using a computationally simpler interpolation technique such as bilinear instead of bicubic interpolation).

When a sample is selected for upscaling, upscaling may be performed for a region of one or more samples around the selected sample, to provide a smoother transition between higher and lower resolution sample regions in the sample set. For example, a 5x5x5 or 7x7x7 region of samples around a selected sample may be upscaled.

The one or more samples may be selected based on predetermined rules (i.e. settings). The predetermined rules may for example be empirically determined so as to select samples that are most salient to the user's perception of the volumetric effect. Alternatively, or in addition, the samples may be selected using a machine learning (ML) model trained to identify salient portions of a sample set for upscaling.

Selecting a subset of the samples for upscaling allows prioritising the upscaling of regions of the 3D sample space that are more salient to the user's perception of the volumetric effect, and improving the efficiency of the upscaling process.

The selecting of samples for upscaling may be performed in dependence on various parameters. In one or more examples, a predetermined setting and/or one or more properties associated with samples in the first sample set may be used to select the subset of samples for upscaling. Alternatively, or in addition, the subset of samples may be selected in dependence on one or more of: a display image of the virtual scene, a depth image of the virtual scene, or a mesh of one or more objects in the virtual scene.

In some cases, the subset of samples for upscaling may be selected in dependence on a position of the sample relative to a virtual camera viewpoint.

For example, a sample may be selected for upscaling in dependence on a distance of the sample from a virtual camera viewpoint in the 3D virtual scene. For instance, a 3D (e.g. spherical) region of a predetermined radius and centred at the virtual camera viewpoint may be defined for the virtual scene, and samples (e.g. froxels) falling within that region may be selected for upscaling; while other samples may not be upscaled or may be upscaled to a lesser degree (e.g. their resolution being increased by a lower factor). Thus, more generally, samples within a predetermined threshold distance of the virtual camera viewpoint may be upscaled, with other samples not upscaled or uspcaled to a lesser degree. This approach allows prioritising the allocation of computing resources to the upscaling of samples that are closer to the virtual camera and so are likely to be more noticeable to the user. Further, by considering sample distance from the virtual camera in 3D space, the present approach can provide a more natural transition from higher sampling resolution regions to lower resolution regions, as the higher sampling resolution regions are adjacent to one another in 3D space. Upscaling samples based on their distance from the virtual camera viewpoint in 3D space more closely mimics the biomechanics of the human eye with respect to focus points (whereby the human eye can selectively focus on objects at different depths), thereby allowing generating more realistic fog effects in the display images generated at step 430.

In some cases, the predetermined threshold distance can vary in different directions from the virtual camera. For example, a higher predetermined threshold distance may be defined for a central/normal direction from the virtual camera (i.e. normal to a 2D screen, see e.g. central line in z-direction in the froxel grid of Figure 5), and a lower predetermined threshold distance may be defined for directions away from the central direction (e.g. the predetermined threshold distance gradually decreasing as the angle between a direction and the central direction increases). In this way, upscaling of central (with respect to the display) samples that may be more noticeable to the user can be prioritised, providing improved balance between efficiency and fog effect quality.

In some cases, when selecting samples for upscaling based on their position relative to the virtual camera viewpoint, the samples' position in one or more specific directions in the 3D space may be considered. This can provide a simplified approach for selecting samples. For example, samples within a predetermined 2D distance from the virtual camera viewpoint, e.g. in the x-y (i.e. height and width) directions, may be selected for upscaling. Alternatively, or in addition, samples within a predetermined 1D distance, e.g. in the z (depth) direction, may be selected for upscaling.

As noted above, each sample of the first set of samples may have a value indicative of both colour and transparency of the volumetric effect at a given region in 3D space (e.g. a respective sample's value may comprise an RGBA value, where A is an alpha value between 1 and 0 for indicating transparency). In some cases, the selection of samples for upscaling may be performed further in dependence on the value of a given sample and of one or more further samples.

For example, a sample may be selected for upscaling in dependence on values of one or more samples between the virtual camera viewpoint and the sample (i.e. based on values of 'intervening' samples). In this way, samples may be selected in dependence on the extent to which they are hidden away by samples closer to the virtual camera. For example, when the volumetric effect comprises fog, samples behind thick fog may not be selected for upscaling as they are less likely to be noticeable to the user. This allows further improving the efficiency of the upscaling process, thus allowing providing higher quality volumetric effects in display images at lower computational cost.

In cases where samples are selected for upscaling if the distance between the sample and the virtual camera is below a predetermined threshold distance, the predetermined threshold distance may vary for different directions in dependence on values of intervening samples in each direction. For example, the predetermined threshold distance may increase with decreasing values of intervening samples in a given direction.

When selecting samples for upscaling, the values of intervening samples may for example be accounted for by summing the values of intervening samples for a given sample. The given sample may then be selected for upscaling if the sum of values of its intervening samples is below a predetermined threshold. A weighting may be applied to the intervening samples, such that values of samples closer to the virtual camera are assigned a higher weighting in the sum. Alternatively, or in addition, an average of values for the intervening samples may be calculated, and samples for which this average is below a predetermined threshold may be selected for upscaling.

The subset of samples for upscaling may, alternatively or in addition, be selected in dependence on a position of the sample relative to (i.e. within) the volumetric effect sampled using the first sample set. For example, samples may be selected in dependence on whether they are adjacent to an edge of the volumetric effect or a region of the volumetric effect with a high level of detail (LOD). This allows taking into account the shape of the volumetric effect and where a given sample is within that overall shape, so as to identify samples that may be most noticeable to the user.

For example, samples adjacent an edge (i.e. boundary) of the volumetric effect may be targeted for upscaling. In this case, selecting a sample for upscaling may comprise selecting a sample in dependence on whether the sample is within a predetermined distance from an edge of the volumetric effect. Differences in resolution of the edges of a volumetric effect (e.g. fog) may be most noticeable to the user; this approach therefore allows more efficiently allocating computing resources. Edges of the volumetric effect may be determined in dependence on values of the samples in the first sample set, to identify where the volumetric effect ends.

Alternatively, or in addition, a sample may be selected for upscaling in dependence on properties of the volumetric effect in the vicinity of the sample. For instance, the LOD of the volumetric effect may be determined in a plurality of sample regions based on the first set of samples, and samples in regions with a higher LOD (e.g. LOD exceeding a predetermined threshold) may be selected for upscaling.

Alternatively, or in addition, a sample may be selected for upscaling in dependence on a value of the sample and/or of one or more neighbouring samples. For instance, a sample may be selected for upscaling based on whether its value (e.g. RGB, and/or A value) is above a predetermined threshold. For example, only samples whose RGB value is above a threshold or whose A (i.e. transparency) value is below a further threshold may be selected for upscaling, and/or may be upscaled to a greater extent than other samples.

In some cases, some portions of the first sample set may be "empty" (i.e. do not include data for the volumetric effect), whereas other portions may include data for the volumetric effect. For example, the first sample set may include a volumetric effect in a lower portion of the 3D sample space (e.g. froxel values associated with volumetric fog) with no volumetric effect in an upper portion of the 3D sample space. For example, a low lying fog may be simulated and sampled. More generally, one or more first portions of the first sample set may comprise sample (e.g. froxel) values associated with a volumetric effect, whereas one or more second portions of the first sample set may comprise empty (i.e. null) sample values. The sampling resolution may be upscaled for the one or more first portions. The one or more second portions may be disregarded.

Hence more generally, in some embodiments of the disclosure, the sampling resolution for a given portion of the first sample set may be increased in dependence on whether the given portion includes data associated with the volumetric effect. For example, for a first portion including samples associated with a volumetric fog effect (e.g. froxel values indicative of at least colour and optionally transparency), the sampling resolution may be increased, whereas a second portion without samples associated with the volumetric fog effect (e.g. null sample values) may be ignored.

In some examples, detection of a given sample portion that includes samples associated with the volumetric effect may be performed using a predetermined block size (e.g. a block of MxMxM samples, such as 4x4x4 froxel blocks or 8x8x8 froxel blocks). The image may be segmented into a number of sample (e.g. froxel) blocks each of a same predetermined size. In response to detection of at least one sample in a sample block having samples associated with the volumetric effect, the sample block can be defined as an active sample block for selection for upscaling. In this way, a given sample portion comprising a plurality of sample blocks each having at least one non-null sample associated with the volumetric effect can be increased in sampling resolution. This can be useful in that parts of the first sample set including an edge of the volumetric effect (i.e. a boundary where the samples transition from the volumetric effect to null samples) can be increased in sampling resolution for providing detail for boundaries of the volumetric effect.

Alternatively, or in addition, the subset of the first set of sampling results may be selected in dependence on positions of samples relative to virtual objects in the virtual scene. Selecting a sample for upscaling may comprise selecting a sample from the first set of sampling results in dependence on a position of the sample relative to one or more virtual objects in the virtual scene. For instance, samples within a predetermined distance of virtual objects may be selected for upscaling. In this way, the sampling resolution may be increased for portions of the first sample set which are expected to correspond to portions of the display image generated at step 430 including one or more virtual objects in the virtual scene. Hence, the quality of the volumetric effect in the resulting display image can be enhanced for the image portion of the display image including the virtual object.

In some cases, the relevant virtual objects (relative to which the position of samples is assessed when selecting samples for upscaling) may be selected, e.g. based on a predefined selection by an operator, or based on one or more properties of the virtual objects. For example, for videogame content, virtual objects of higher importance to the gameplay (e.g. corresponding to an enemy boss) may be selected based on game state data, such that higher quality volumetric effects are obtained around these higher importance virtual objects. Alternatively, or in addition, virtual objects having predetermined properties (e.g. destructible objects, or objects of a given colour or brightness) may be selected.

The position of the virtual objects may for example be determined in dependence on one or more of: a previous display image of the virtual scene, a depth image of the virtual scene, a mesh of one or more virtual objects in the virtual scene, and/or game state data in cases where videogame content is rendered. The depth image and/or mesh of objects may be retrieved from a rendering pipeline (such as the pipeline 200). Game state data may for example be retrieved from a game engine for the videogame.

More generally, the display image, depth image, mesh, and game state data inputs may serve to guide the upscaling step 420 to target one or more portions of the first sample set for increasing the sampling resolution thereof. For example, the depth image may be useful for indicating locations of edges for virtual objects in the virtual scene. Using the depth image, locations of virtual objects and/or surface boundaries for such objects can be identified and one or more portions of the first sample set can be targeted for upscaling for enhancing quality for these parts of the virtual scene in the resulting display image. A mesh of the objects (e.g. as generated in the rendering pipeline prior to shading) may likewise be used to identify virtual objects and their boundaries in the virtual scene.

Alternatively or in addition to using a depth image, a display image for the virtual scene may be used to select samples for upscaling. In particular, a previous display image (e.g. from an immediately preceding frame, or from N frames ago, where N is greater or equal to two) may be used to select one or more samples for upscaling when rendering the current display image frame. It can be assumed that use of a previous display image can provide information for locations of virtual objects and/or surface boundaries with sufficient accuracy. For example, it can be expected that positions of objects may not change (or may change very little) between one frame and the next frame and thus a previous display image may be used for providing guidance as to one or more sample portions to be targeted for upscaling.

In some cases, samples may be selected for upscaling in dependence on the level of detail (LOD) in one or more of the display image, depth image, and/or mesh of objects in the vicinity of the samples. For examples, samples within a predetermined distance of regions of the virtual scene having a LOD above a predetermined threshold (e.g. as determined based on the display or depth image) may be selected for upscaling. This allows more efficiently allocating the upscaling processing resources to the most salient, high LOD, regions that would most benefit from an increase in fog quality.

It will be appreciated that samples may be selected for upscaling based on further parameters alternatively or in addition to those discussed above.

For example, samples may be selected for upscaling in dependence on a gaze position of a user of the display images generated at step 430. The gaze position may for example be obtained from a gaze tracker as provided as part of the HMD 120. Samples corresponding to a user's foveal region may then be selected for upscaling.

Alternatively, or in addition, samples may be selected based on user input. For example, a user input may define one or more regions in the virtual scene, and/or one or more objects in the virtual scene. Samples within a predetermined distance of those regions and/or objects may then be selected for upscaling.

It will also be appreciated that the selection of samples for upscaling may vary between frames of the display images generated at step 430. For example, different samples may be selected for upscaling for a first frame than for one or more subsequent frames. The content depicted in the display images generated by the image processing circuitry 330 may vary due to changes in position and/or orientation of a virtual viewpoint associated with the display image and/or movement of parts of the virtual scene (e.g. virtual objects moving within the virtual scene). Hence, the selection of samples may vary over time to allow upscaling to be targeted to different parts of the first sample set for different times. For example, display images may be sequentially generated and a sequence of display image (or depth images, or object meshes) may be retrieved for allowing sample portions targeted for upscaling to be varied with respect to time.

A step 430 comprises generating one or more display images for the virtual scene at least partly in dependence on the second, upscaled, set of sampling results generated at step 420.

The second sample set has an increased sampling resolution, thus providing higher quality volumetric effects in the display images. In particular, as described herein, the upscaling is performed in the 3D sample space, thus providing improved volumetric effect quality and temporal coherence. In this way, method 400 allows sampling the computer-generated volumetric effect data using a potentially low resolution sampling calculating (for example, sampling using a 64x64x128 froxel grid), while still obtaining high quality volumetric effects in the final display images.

Generating the display images may comprise generating a 2D volumetric effect image (i.e. a 'volumetric effect map') for a virtual camera viewpoint in dependence on the second set of sampling results, and generating display images for the virtual scene in dependence on the 2D volumetric effect image. Thus, an intermediate volumetric effect image may be generated based on the upscaled samples of the volumetric effect, and a display image may be generated based on the intermediate volumetric effect image. Generating the 2D volumetric effect image may comprise projecting the second set of sampling results onto a two-dimensional image plane for a virtual camera viewpoint, thereby obtaining the 2D volumetric effect image. Generating the display images may for example comprise overlaying the 2D volumetric effect image over other elements of the virtual scene as rendered using a rendering pipeline.

The 2D volumetric effect image may be a 2D representation of the 3D upscaled sampling results obtained using the 3D grid (e.g. froxel grid). The 2D volumetric effect image may be obtained as a projection of the sampling results onto a 2D image plane for a virtual camera viewpoint (such as the virtual camera viewpoint 510 in Figure 5). For example, sample results corresponding to a same froxel for the different depth slices can be combined to obtain a respective result for a respective pixel in the 2D volumetric effect image. For example, with reference to Figure 5 sample results for each of the froxels indicated by the arrows 530 may be combined to calculate a respective result for a respective pixel in the 2D volumetric effect image. In other words, sample results for each froxel in a same column of froxels extending from the virtual camera viewpoint 510 in the depth axes can be combined to obtain a respective pixel value in the 2D volumetric effect image. For example, a weighting may be used to combine the sample results, with larger weightings being used for frustum voxels closer to the virtual viewpoint 510 and smaller weightings being used for frustum voxels further from the virtual viewpoint 510. The 2D volumetric fog effect image may comprise pixel values each indicative of colour and transparency (e.g. RGBA) for a respective pixel. The 2D volumetric effect image may then be used as an overlay image when generating the display images.

Alternatively, step 430 may comprise generating the display images directly based on the second set of sampling results, without generating an intermediate 2D volumetric effect image. For example, the second sample set may be used directly as an input to a rendering (e.g. shading) stage in the rendering pipeline, without rendering a 2D volumetric effect image.

The display images generated at step 430 may correspond to any suitable content such as a video game or other similar interactive application. The display images may be generated according to any suitable frame rate and any suitable image resolution. In some examples, display images may be generated with a frame rate of 30 Hz, 60 Hz or 120Hz or any frame rate between these possibilities. The display images may relate to 2D images suitable for being displayed by a television or other similar monitor device. Alternatively, the display images may relate to stereoscopic images for being displayed by an HMD. References herein to display images refer to any of 2D images and stereoscopic images.

Step 430 may comprise generating a plurality of display images for visually depicting a virtual scene (computer-generated environment). The virtual scene may correspond to a game world for a video game or other similar scene. In some examples, the virtual scene may correspond to a virtual reality (VR) environment which can be explored and interacted with by a user viewing the content images via a display device such as a head mountable displayed (HMD). Hence, step 430 may comprise generating display images depicting a virtual reality (VR) environment for display by an HMD. The display images may comprise pixel values which may be RGB pixel values. For example, the display images may be 24-bit RGB images such that each pixel value has 24-bits with 8-bits per colour channel. Alternatively, another colour space may be used, such as YCbCr colour space.

The display images may be generated in accordance with a virtual viewpoint position and/or orientation that may be controlled by a user. For example, a user may control a virtual viewpoint with respect to a virtual environment using one or more of a handheld controller device (e.g. 130, 130A) and/or a tracked position and/or orientation of an HMD (e.g. 120). The display images can thus be generated according to a user-controlled viewpoint. For example, the display images may have a viewpoint such as a first person viewpoint or a third person viewpoint for a virtual entity (e.g. virtual avatar or virtual vehicle) controlled by a user.

The display images may be generated according to any suitable frame rate. The volumetric effect data may be sampled at step 410 according to a frame rate that is less than or equal to a frame rate for the display images. Hence, in some examples the sampling at step 410 and upscaling at step 420 may be performed according to a first frame rate (i.e. a 1:1 correspondence for an first sample set and a higher resolution second sample set), and display images may be generated at step 430 according to a second frame rate. The first frame rate and the second frame rate may be the same (e.g. 60 Hz). Alternatively, the first frame rate may be less than the second frame rate such that a same respective higher resolution second sample set may be used for generating two or more display images.

In some cases, the image processing method 400 may further comprise simulating (i.e. generating the volumetric effect data for the virtual scene. The volumetric effect data (e.g. volumetric fog effect data) may be simulated as a temporal and spatial simulation. The simulation may be performed for a portion of a virtual scene currently within a field of view of a virtual camera. A real-time fluid dynamics simulation may be computed for simulating interaction of fluid with parts of a virtual scene. For example, any of the fluid simulations supported by the Unreal ^{®} game engine or Unity^{®} game engine may be used. The simulated volumetric effect data may then be sampled at step 410 as described herein.

In some cases, the image processing method 400 may further comprise outputting the display images generated at step 430 to a display device.

Referring back to Figure 4, in a summary embodiment of the present invention an image processing method 400 for generating images including a volumetric effect comprises the following steps.

A step 410 comprises sampling, using a three-dimensional grid, computer-generated volumetric effect data for a virtual scene at a first sampling resolution, to obtain a first set of sampling results, as described elsewhere herein.

A step 420 comprises upscaling at least part of the first set of sampling results by interpolating between samples of the at least part of the first set of sampling results, to obtain a second set of sampling results having a second, higher, sampling resolution, as described elsewhere herein.

A step 430 comprises generating one or more display images for the virtual scene at least partly in dependence on the second set of sampling results, as described elsewhere herein.

It will be apparent to a person skilled in the art that variations in the above method corresponding to operation of the various embodiments of the method and/or apparatus as described and claimed herein are considered within the scope of the present disclosure, including but not limited to that:
- sampling the computer-generated volumetric effect data at step 410 comprises sampling using a frustrum voxel grid, as described elsewhere herein;
   - in this case, optionally the frustrum voxel grid comprises frustrum voxels aligned with a virtual camera viewpoint, as described elsewhere herein;
- the interpolating at step 420 is performed using bicubic interpolation, as described elsewhere herein;
- interpolating between samples of the at least part of the first set of sampling results comprises dividing, along a first direction, the at least part of the first set of sampling results into a plurality of slices, and performing interpolation for each slice, as described elsewhere herein;
   - in this case, optionally the first direction is a depth direction, and each slice is a depth slice, as described elsewhere herein;
   - in this case, optionally interpolating between samples of the at least part of the first set of sampling results further comprises dividing, in a second direction (e.g. perpendicular to the first direction), the at least part of the first set of sampling results into a plurality of further slices, and performing interpolation for each further slice, as described elsewhere herein;
   - in this case, optionally interpolating between samples of the at least part of the first set of sampling results further comprises performing interpolation between samples in the first direction (e.g. using linear interpolation), as described elsewhere herein;
- generating one or more display images at step 430 comprises: generating a two-dimensional volumetric effect image for a virtual camera viewpoint at least partly in dependence on the second set of sampling results; and generating one or more display images for the virtual scene at least partly in dependence on the 2D volumetric effect image, as described elsewhere herein;
   - in this case, optionally generating the two-dimensional volumetric effect image comprise projecting the second set of sampling results onto a two-dimensional image plane for a virtual camera viewpoint, to obtain a 2D volumetric effect image (i.e. a volumetric effect (e.g. fog) map), as described elsewhere herein;
- the method further comprises selecting a subset of the first set of sampling results for the at least part of the first set of sampling results for upscaling, as described elsewhere herein;
   - in this case, optionally selecting the subset of the first set of sampling results comprises selecting a sample from the first set of sampling results in dependence on a position of the sample relative to the volumetric effect (i.e. a position of the sample within the volumetric effect being sample), as described elsewhere herein;
      ▪ where, optionally selecting a sample from the first set of sampling results comprises selecting a sample in dependence on a distance between the sample and an edge of the volumetric effect, as described elsewhere herein;
      ▪ where, optionally selecting a sample from the first set of sampling results comprises selecting a sample in dependence on whether the sample is within a predetermined distance from an edge of the volumetric effect, as described elsewhere herein;
   - in this case, optionally selecting the subset of the first set of sampling results comprises selecting a sample from the first set of sampling results in dependence on a position of the sample relative to a virtual camera viewpoint (for the display images), as described elsewhere herein;
      ▪ where, optionally selecting a sample from the first set of sampling results comprises selecting a sample in dependence on a distance between the sample and the virtual camera viewpoint, as described elsewhere herein;
         - where, optionally the distance is a distance in the 3D grid space, as described elsewhere herein;
      ▪ where, optionally selecting a sample from the first set of sampling results comprises selecting a sample further in dependence on a value of one or more samples between the virtual camera viewpoint and the sample, as described elsewhere herein;
   - in this case, optionally selecting the subset of the first set of sampling results comprises selecting a sample from the first set of sampling results in dependence on a position of the sample relative to one or more virtual objects in the virtual scene, as described elsewhere herein;
   - in this case, optionally selecting the subset of the first set of sampling results is performed in dependence on one or more from the list consist of: a previous display image of the virtual scene; a depth image of the virtual scene; and a mesh of one or more virtual objects in the virtual scene, as described elsewhere herein;
   - in this case, optionally selecting the one or more samples from the first set of sampling results comprises selecting one or more samples in dependence on one or more from the list consisting of: a position of a sample in the 3D sampling grid; a value of a sample, values of one or more neighbouring samples, and values of one or more intervening samples, as described elsewhere herein;
- the computer-generated volumetric effect data comprises one or more from the list consisting of: volumetric fog effect data; volumetric smoke effect data; volumetric water effect data; volumetric fire effect data; and volumetric mobile particles (e.g. sand, or avalanches, etc.) effect data, as described elsewhere herein;
- the three-dimensional grid comprises a voxel grid, as described elsewhere herein;
- the three-dimensional grid comprises a froxel grid, as described elsewhere herein;
- upscaling the at least part of the first set of sampling results comprises upsampling the at least part of the first set of sampling results, as described elsewhere herein;
- the interpolating is performed using tricubic interpolation, as described elsewhere herein;
- the at least part of the first set of sampling results comprises all of the first set of sampling results, as described elsewhere herein;
- the virtual scene is a virtual scene for a videogame, as described elsewhere herein;
- the method further comprises simulating the volumetric effect to obtain the computer-generated volumetric effect data, as described elsewhere herein;
- upscaling the at least part of the first set of sampling results comprises using a first interpolation technique (e.g. bicubic interpolation) for a first portion of the at least part of the first set of sampling results, and a second interpolation technique (e.g. bilinear interpolation) for a second portion of the at least part of the first set of sampling results, as described elsewhere herein;
- the method further comprises outputting the generated display images to a display device
- the method is computer-implemented, as described elsewhere herein; and
- the virtual scene is a virtual scene for a videogame, as described elsewhere herein.

It will be appreciated that the above methods may be carried out on conventional hardware suitably adapted as applicable by software instruction or by the inclusion or substitution of dedicated hardware.

Thus the required adaptation to existing parts of a conventional equivalent device may be implemented in the form of a computer program product comprising processor implementable instructions stored on a non-transitory machine-readable medium such as a floppy disk, optical disk, hard disk, solid state disk, PROM, RAM, flash memory or any combination of these or other storage media, or realised in hardware as an ASIC (application specific integrated circuit) or an FPGA (field programmable gate array) or other configurable circuit suitable to use in adapting the conventional equivalent device. Separately, such a computer program may be transmitted via data signals on a network such as an Ethernet, a wireless network, the Internet, or any combination of these or other networks.

Referring back to Figure 3, in a summary embodiment of the present invention, an image processing system 300 for generating images including a volumetric effect may comprise the following:
A sampling processor 310 configured (for example by suitable software instruction) to sample, using a three-dimensional grid, computer-generated volumetric effect data for a virtual scene at a first sampling resolution, to obtain a first set of sampling results, as described elsewhere herein.

An upscaling processor 320 configured (for example by suitable software instruction) to upscale at least part of the first set of sampling results by interpolating between samples of the at least part of the first set of sampling results, to obtain a second set of sampling results having a second, higher, sampling resolution, as described elsewhere herein.

An image generating processor 330 configured (for example by suitable software instruction) to generate one or more display images for the virtual scene at least partly in dependence on the second set of sampling results, as described elsewhere herein.

It will be appreciated that the above system 300, operating under suitable software instruction, may implement the methods and techniques described herein.

Of course, the functionality of these processors may be realised by any suitable number of processors located at any suitable number of devices and any suitable number of devices as appropriate rather than requiring a one-to-one mapping between the functionality and a device or processor.

The foregoing discussion discloses and describes merely exemplary embodiments of the present invention. As will be understood by those skilled in the art, the present invention may be embodied in other specific forms without departing from the spirit or essential characteristics thereof. Accordingly, the disclosure of the present invention is intended to be illustrative, but not limiting of the scope of the invention, as well as other claims. The disclosure, including any readily discernible variants of the teachings herein, defines, in part, the scope of the foregoing claim terminology such that no inventive subject matter is dedicated to the public.

### EMBODIMENTS

Although the present invention is defined in the claims, it should be understood that the present invention can also (alternatively) be defined in accordance with the following embodiments:
1. An image processing method for generating images including a volumetric effect, the method comprising:
   sampling, using a three-dimensional grid, computer-generated volumetric effect data for a virtual scene at a first sampling resolution, to obtain a first set of sampling results;
   upscaling at least part of the first set of sampling results by interpolating between samples of the at least part of the first set of sampling results, to obtain a second set of sampling results having a second, higher, sampling resolution; and
   generating one or more display images for the virtual scene at least partly in dependence on the second set of sampling results.
2. The image processing method of embodiment 1, wherein sampling the computer-generated volumetric effect data comprises sampling using a frustrum voxel grid.
3. The image processing method of embodiment 1 or 2, wherein the interpolating is performed using bicubic interpolation.
4. The image processing method of any preceding embodiment, wherein interpolating between samples of the at least part of the first set of sampling results comprises dividing, along a first direction, the at least part of the first set of sampling results into a plurality of slices, and performing interpolation for each slice.
5. The image processing method of embodiment 4, wherein the first direction is a depth direction, and each slice is a depth slice.
6. The image processing method of embodiment 4 or 5, wherein interpolating between samples of the at least part of the first set of sampling results further comprises performing interpolation between samples in the first direction.
7. The image processing method of any preceding embodiment, wherein generating one or more display images comprises:
   generating a two-dimensional volumetric effect image for a virtual camera viewpoint at least partly in dependence on the second set of sampling results; and
   generating one or more display images for the virtual scene at least partly in dependence on the 2D volumetric effect image.
8. The image processing method of any preceding embodiment, further comprising selecting a subset of the first set of sampling results for the at least part of the first set of sampling results for upscaling.
9. The image processing method of embodiment 8, wherein selecting the subset of the first set of sampling results comprises selecting a sample from the first set of sampling results in dependence on a position of the sample relative to the volumetric effect.
10. The image processing method of embodiment 9, wherein selecting a sample from the first set of sampling results comprises selecting a sample in dependence on a distance between the sample and an edge of the volumetric effect.
11. The image processing method of any of embodiments 8 to 10, wherein selecting the subset of the first set of sampling results comprises selecting a sample from the first set of sampling results in dependence on a position of the sample relative to a virtual camera viewpoint.
12. The image processing method of embodiment 11, wherein selecting a sample from the first set of sampling results comprises selecting a sample in dependence on a distance between the sample and the virtual camera viewpoint.
13. The image processing method of embodiment 11 or 12, wherein selecting a sample from the first set of sampling results comprises selecting a sample further in dependence on a value of one or more samples between the virtual camera viewpoint and the sample.
14. The image processing method of any of embodiments 8 to 13, wherein selecting the subset of the first set of sampling results comprises selecting a sample from the first set of sampling results in dependence on a position of the sample relative to one or more virtual objects in the virtual scene.
15. The image processing method of any of embodiments 8 to 14, wherein selecting the subset of the first set of sampling results is performed in dependence on one or more from the list consist of:
   a previous display image of the virtual scene;
   a depth image of the virtual scene;
   a mesh of one or more virtual objects in the virtual scene.
16. The image processing method of any preceding embodiment, wherein the computer-generated volumetric effect data comprises one or more from the list consisting of:
   volumetric fog effect data;
   volumetric smoke effect data;
   volumetric water effect data;
   volumetric fire effect data; and
   volumetric mobile particles effect data.
17. A computer program comprising computer executable instructions adapted to cause a computer system to perform the method of any one of the preceding embodiments.
18. An image processing system for generating images including a volumetric effect, the system comprising:
   a sampling processor configured to sample, using a three-dimensional grid, computer-generated volumetric effect data for a virtual scene at a first sampling resolution, to obtain a first set of sampling results;
   an upscaling processor configured to upscale at least part of the first set of sampling results by interpolating between samples of the at least part of the first set of sampling results, to obtain a second set of sampling results having a second, higher, sampling resolution; and
   an image generating processor configured to generate one or more display images for the virtual scene at least partly in dependence on the second set of sampling results.

## Claims

1. An image processing method (400) for generating images including a volumetric effect, the method comprising:
sampling (410), using a three-dimensional grid, computer-generated volumetric effect data for a virtual scene at a first sampling resolution, to obtain a first set of sampling results;
upscaling (420) at least part of the first set of sampling results by interpolating between samples of the at least part of the first set of sampling results, to obtain a second set of sampling results having a second, higher, sampling resolution; and
generating (430) one or more display images for the virtual scene at least partly in dependence on the second set of sampling results.

2. The image processing method of claim 1, wherein sampling the computer-generated volumetric effect data comprises sampling using a frustrum voxel grid.

3. The image processing method of claim 1 or 2, wherein the interpolating is performed using bicubic interpolation.

4. The image processing method of any preceding claim, wherein interpolating between samples of the at least part of the first set of sampling results comprises dividing, along a first direction, the at least part of the first set of sampling results into a plurality of slices, and performing interpolation for each slice, optionally wherein the first direction is a depth direction, and each slice is a depth slice.

5. The image processing method of claim 4, wherein interpolating between samples of the at least part of the first set of sampling results further comprises performing interpolation between samples in the first direction.

6. The image processing method of any preceding claim, wherein generating one or more display images comprises:
generating a two-dimensional volumetric effect image for a virtual camera viewpoint at least partly in dependence on the second set of sampling results; and
generating one or more display images for the virtual scene at least partly in dependence on the 2D volumetric effect image.

7. The image processing method of any preceding claim, further comprising selecting a subset of the first set of sampling results for the at least part of the first set of sampling results for upscaling, optionally wherein selecting the subset of the first set of sampling results comprises selecting a sample from the first set of sampling results in dependence on a position of the sample relative to the volumetric effect.

8. The image processing method of claim 7, wherein selecting a sample from the first set of sampling results comprises selecting a sample in dependence on a distance between the sample and an edge of the volumetric effect.

9. The image processing method of any of claims 7 to 8, wherein selecting the subset of the first set of sampling results comprises selecting a sample from the first set of sampling results in dependence on a position of the sample relative to a virtual camera viewpoint, optionally wherein selecting a sample from the first set of sampling results comprises selecting a sample in dependence on a distance between the sample and the virtual camera viewpoint.

10. The image processing method of claim 9, wherein selecting a sample from the first set of sampling results comprises selecting a sample further in dependence on a value of one or more samples between the virtual camera viewpoint and the sample.

11. The image processing method of any of claims 7 to 10, wherein selecting the subset of the first set of sampling results comprises selecting a sample from the first set of sampling results in dependence on a position of the sample relative to one or more virtual objects in the virtual scene.

12. The image processing method of any of claims 7 to 11, wherein selecting the subset of the first set of sampling results is performed in dependence on one or more from the list consist of:
a previous display image of the virtual scene;
a depth image of the virtual scene;
a mesh of one or more virtual objects in the virtual scene.

13. The image processing method of any preceding claim, wherein the computer-generated volumetric effect data comprises one or more from the list consisting of:
volumetric fog effect data;
volumetric smoke effect data;
volumetric water effect data;
volumetric fire effect data; and
volumetric mobile particles effect data.

14. A computer program comprising computer executable instructions adapted to cause a computer system to perform the method of any one of the preceding claims.

15. An image processing system (300) for generating images including a volumetric effect, wherein the system is configured to perform the method of any one of claims 1 to 13.
